# EUROPEAN PATENT SPECIFICATION

(11) **EP 1 649 986 B1**
(45) Date of publication and mention of the grant of the patent: **18.03.2009**
(21) Application number: 05077299.5
(22) Date of filing: 10.10.2005
(51) Int. Cl.: B25J 13/08, B66F 9/18

(54) **Method and apparatus for handling a load**
Verfahren und Vorrichtung zur Handhabung einer Last
Méthode et appareil de manutention de charge

(30) Priority: 19.10.2004 FI 20041352
(43) Date of publication of application: 26.04.2006
(73) Proprietor: Auramo OY, 01511 Vantaa (FI)
(72) Inventor: Merin, Peter, 00440 Helsinki (FI); Hellgren, Pertti, 03790 Vihtijärvi (FI); Rehu, Jari, 90810 Kiviniemi (FI)
(74) Representative: Järveläinen, Pertti Tauno Juhani

(56) References cited:
- EP-A- 0 443 998
- EP-A- 0 664 272
- US-A- 3 904 234

## Description

### Field of invention

The present invention relates to a method for handling loads, especially easily damageable goods, like paper rolls or household appliances, with a gripper provided with arms capable of clamping the load by applying a compressive force to the load wherein the compressive force is adjusted on the basis of the slippage measured with slip sensors between the load and the contact pads attached to the arms. The present invention also relates to a gripper provided with arms for handling a load, especially easily damageable goods.

Such a method is known from US-A-3,904,234.

### Background of the invention

Paper rolls and other goods, like household appliances, may be handled using a gripper mounted on a forklift truck and having arms which are hydraulically pressed against the load. The compressive force of the arms can be adjusted manually e.g. to four different settings, depending on the load. Especially because of the rough adjustment of the compressive force, the load is often damaged or dropped due to incorrect compression.

In order to reduce the risk for damaging the load during the handling action the compressive force necessary for lifting and moving the load, like a paper roll or a household appliance, may be optimized. Such a system is disclosed in US Patent 5,929,219. US Patent 5,929,219 discloses a gripper mounted on a forklift truck designed for the lifting and moving of paper rolls. The gripper is provided with turnable arms with plate-like, hinged contact pads. The compressive force is adjusted on the basis of the slippage between the paper roll and the contact pads. The slippage is measured by means of slip sensors mounted on the contact pads. The slip sensors are provided with a rotating roller which is held in contact with the paper roll. As the paper roll slides relative to the contact pads, the roller rotates and the slip sensors measure the relative movement in terms of a pulse count. In US Patent 5,929,219 it is also possible to control and optimize the compressive force during the whole load handling operation, comprising e.g. the lifting operation, the transfer, the rotation and the lowering of the load. The slippage is measured continuously and, if the paper roll starts slipping, the pressure between the contact pads is increased automatically until no slippage occurs.

### The present invention

It is an object of the present invention to provide an improved system for handling of loads, especially easily damageable goods, whereby the operation of the slip sensors can be controlled. It is further an object of the present invention to provide a system for determining the number of load units and for monitoring the contact between the contact pads attached to the arms and the load.

This is achieved by providing each slip sensor with a motor that is driving and rotating the sensor roller. With the help of the motor the operation of the slip sensors and the contact between the contact pads and the load can be monitored by detecting the movement of the arms and reading the signals transmitted by the slip sensors. In addition, e.g. in the case of household appliances the number of the load units can also be determined.

Characteristic features of the present invention are in detail presented in the enclosed claims.

The advantage of the present invention is that the condition of the slip sensors can be monitored and the failure of the slip sensors thus easily and rapidly identified. Another advantage is that the contact between the contact pads and the load can be verified which eliminates the risk of incorrect positioning of the contact pads in relation to the load. This improves the reliability and efficiency of the load handling. Additionally the number of the load units can be determined automatically.

### Brief description of drawings

The foregoing, and additional objects, features and advantages of the present invention will be more clearly understood from the following detailed description of preferred embodiments of the present invention, taken in conjunction with accompanying drawings, in which:
FIG. 1 presents a forklift truck provided with a gripper according to the present invention,
FIG. 1A presents another forklift truck provided with a gripper according to the present invention,
FIG. 2 presents the hydraulic system,
FIG. 3 presents a block diagram of the control system according to the present invention,
FIG. 4 presents the flow chart of the slip sensor monitoring operation, and

FIG. 5 presents a slip sensor arrangement according to the present invention.

### Detailed description of the invention

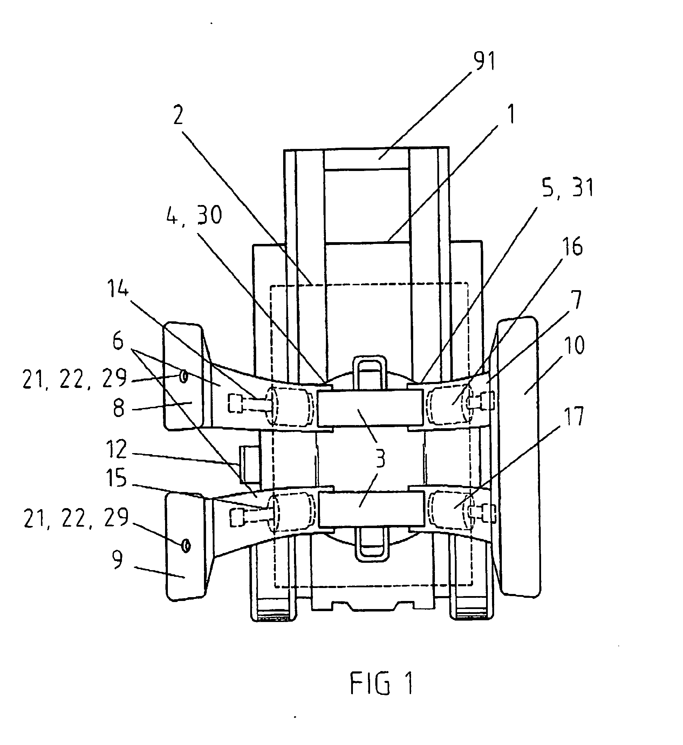

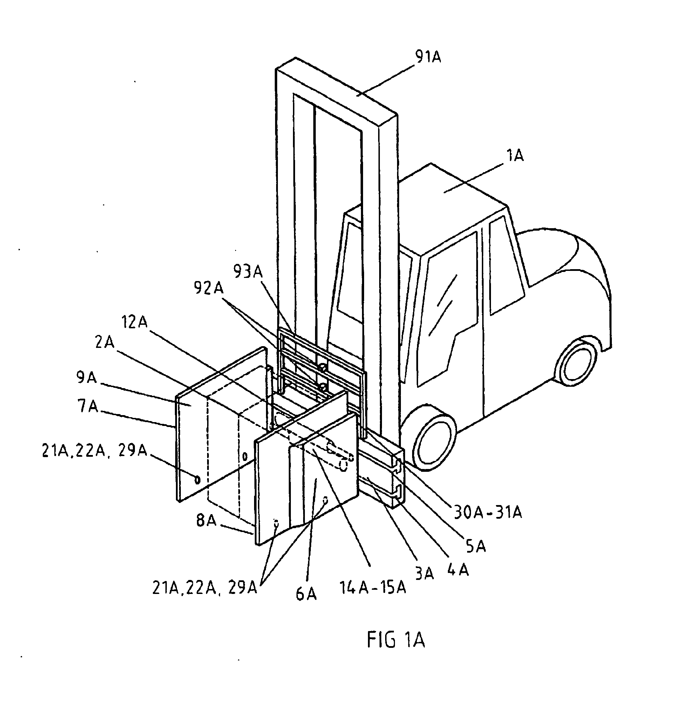

FIG. 1 shows a gripper designed for the lifting and moving of paper rolls 2 or other loads. The gripper, mounted e.g. on a forklift truck 1 having a lifting mast 91, is provided with turnable arms 6 and 7 attached to a frame 3, the pivot point of the arms being located at points 4 and 5. The frame 3 is fastened to the mast 91. One of the arms can be split and the other non-split. The ends of the arms are provided with plate-like, hinged contact pads 8-10 which grip the load. The frame accommodates a hydraulic system comprising a rotation mechanism and hydraulic cylinders 14-17 for turning the arms and a hydraulic valve block 12 with an inbuilt overpressure protection.

FIG. 1A shows another gripper designed for the lifting and moving of especially rectangularly shaped loads 2A, like household appliances. The gripper, mounted e.g. on a forklift truck 1A having a lifting mast 91A, is provided with linearly movable arms 6A and 7A attached to a frame 3A by means of arm carriers 4A, 5A. The ends of the arms are provided with plate-like, hinged contact pads 8A-9A which grip the load. The frame 3A accommodates a hydraulic system comprising a drive mechanism and hydraulic cylinders 14A-15A for moving the arms linearly and a hydraulic valve block 12A with an inbuilt overpressure protection. A load rest 93A can be fastened to the frame 3A.

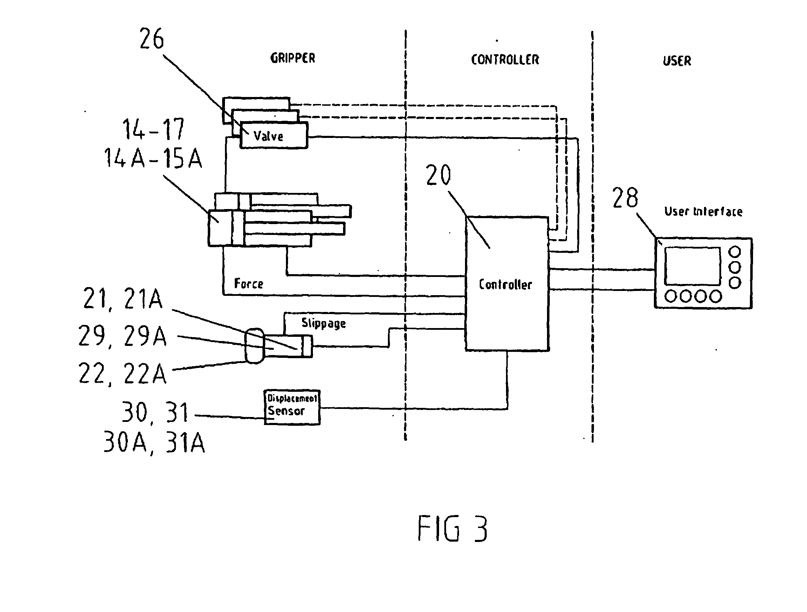

Both grippers are further provided with slip sensors 21, 21A mounted on the contact pads 8, 9, 8A, 9A. The sensor is further provided with a roller 22 rotating on an axle and held in contact with the paper roll by a spring and an electric motor 29, integrated to the sensor and rotating the roller. The grippers are further provided with displacement sensors 30, 31, 30A, 31A arranged in the pivot points 4 and 5 or in the frame 3, 3A or arm carriers 4A, 5A in order to measure the anglelposition and the movement of the arms. The operation of both grippers is controlled by a controller 20 (FIG. 3).

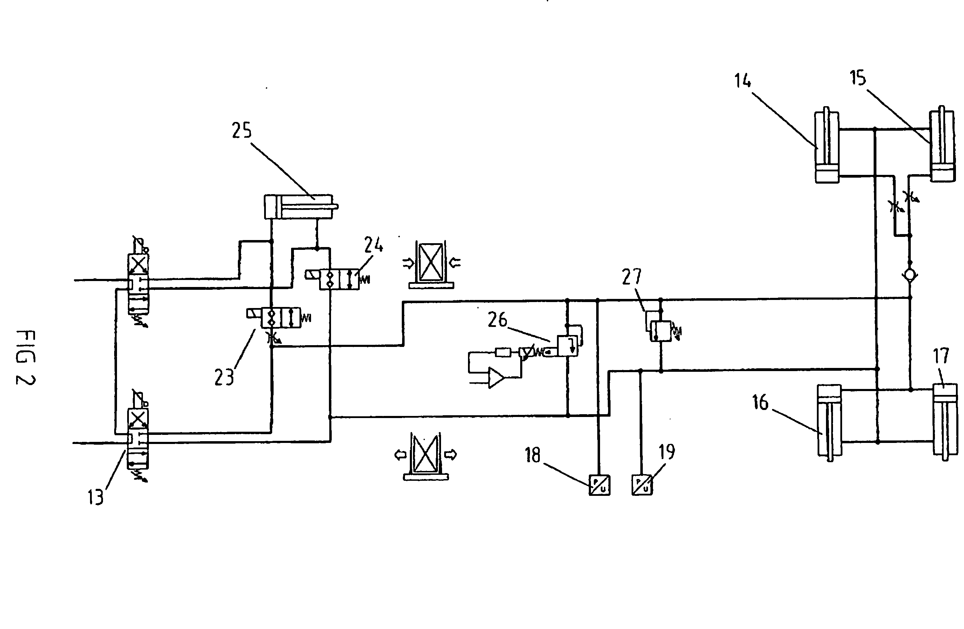

The operating cycle begins when the forklift truck brings the gripper onto the load, so that the gripper arms 6, 7, 6A, 7A come on opposite sides of the load. Compression is started when the truck operator opens the manual valve 13 (FIG. 2). The oil now flows directly into the hydraulic cylinders (compressing cylinders) 14-17, 14A, 15A causing the arms 6, 7, 6A, 7A to move until they have contact with the load. When the hydraulic pressure measured by pressure sensors 18 and 19 rises to a predetermined value, the controller starts the measurement of the slippage. The slippage is measured by means of slip sensors 21, 21A . As the load slips relative to the contact pads 8, 9, 8A, 9A, the roller 22, 22A rotates and the slip sensor measures the relative movement (slip) in terms of a pulse count.

Simultaneously with the slippage measurement, an optional slow lifting action (prelift) may be started. The controller opens the solenoid valves 23 and 24, permitting some oil to flow into the lifting cylinder 25 of the forklift truck. The optional slow lifting motion enables a precise pressure control. The forklift truck lifts the gripper slowly and the load remains at first unmoved. The valves 23 and 24 may also be connected in a different way from FIG. 2.

Based on the slippage, the controller controls a proportional valve 26 in valve block 12, 12A which adjusts the pressure in the cylinders 14-17, 14A, 15A in accordance with its control signal. The pressure can never rise beyond the value to which the mechanical, spring-loaded pressure limiting valve 27 has been adjusted. The pressure is increased until the gripper holds the load firmly and no slipping occurs. When the load is held firmly the controller stops increasing the pressure and a user interface 28 or equivalent signals the operator that the compression has been completed. The operator may then close the manual valve 13. After this, the operator may perform the desired handling operations, like lifting or turning the load 2, 2A, and drive the forklift truck 1 or 1A as required.

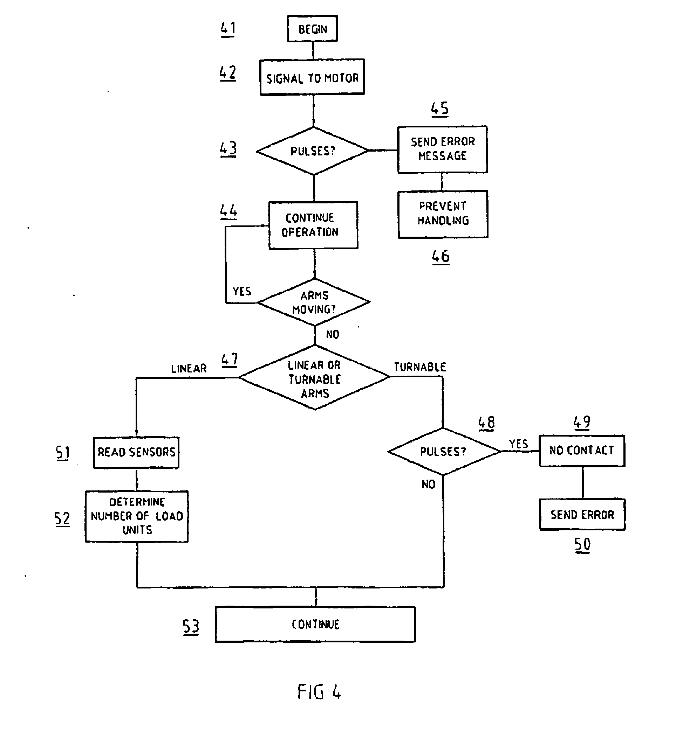

According to the invention, the operation of the slip sensors are monitored in accordance with FIG. 4 as follows: Before or during movement of the arms 6, 7, 6A, 7A towards the load 2, 2A, the controller 20 starts the sensor control 41 by sending a drive signal 42 to the motor 29. If the slip sensors send signals 43 to the controller, the sensors are operating correctly and the clamping is continued at 44, otherwise an error signal is sent at 45 and the handling is interrupted at 46.

At 47, in the case of a gripper provided with turnable arms (FIG 1), if pulses are received by the controller at 48, and the arms are not moving, which can be detected by the displacement sensors 30, 31,30A, 31A, there is no contact 49 and an error message is sent at 50 and the operation is interrupted. If the arms are not moving and the controller is not receiving pulses, then the operation of the load handling is continued at 53 according to the operating cycle described above.

At 47, in the case of a linear movement gripper (FIG. 1A) with at least two slip sensors arranged horizontally one after another all slip sensors are read in order to analyze which slip sensors are transmitting pulses 51. Based on this analysis the number of load units between the contact pads in lengthwise direction can be determined 52. After that the operation continues at 53.

The number of load units between the arms in transverse direction can naturally be determined when the size of the load units is known by measuring the position of the arms with displacement sensors 30A, 31A.

Further, by fastening one or more infrared (IR) or ultrasound detectors 92A to the load rest 93A on a height above the slip sensors (see FIG. 1A) and when the height of each load unit is known, the number of the load units in the vertical direction can be determined by detecting the signals from detectors 92A.

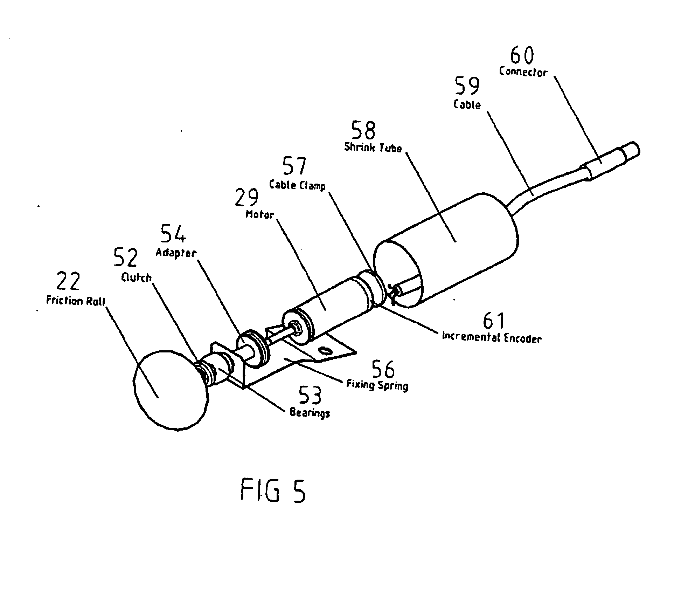

FIG. 5 shows an exemplary sensor unit in detail. It comprises a friction roller 22, a clutch 52 adjacent to the roll, bearings 53, an adapter 54, and a motor 29 on the same shaft as the roller thus capable of rotating the roller. The unit further comprises a fixing spring 56, for fixing the unit into the contact pads, a cable tension remover 57, a shrink tube 58 for protecting the unit, a connection cable 59 and a connector 60. The unit further comprises an incremental pulse encoder 61 for generating pulse signals according to the rotation.

It is obvious to a person skilled in the art that the invention is not restricted to the example described above, but that it may instead be varied within the scope of the following claims. The slip sensor monitoring can be implemented as provided by the invention regardless of the structure of the arms, e.g. in the case of a gripper provided with two or more split arms and having a linear arm motion. Moreover, the system regulating the compressive force may comprise two or more controllers 20 e.g. if the system has been designed for simultaneous handling of several paper rolls or household appliances. Further, also other especially easily damageable goods can be handled with a similar manner.

## Claims

1. A method of handling of loads (2, 2A), especially easily damageable goods, with a gripper provided with arms (6, 7, 6A, 7A) capable of clamping the load by applying a compressive force to the load wherein the compressive force applied to the load is adjusted on the basis of the slippage measured with one or several rotatable slip sensors between the load and contact pads (8, 9, 8A, 9A) arranged in the arms, **characterised in that** the method comprises following steps:
- providing drive signals to one or several drive units (29) arranged to rotate the rotating parts, like rollers, of the sensors,
- monitoring the rotation of the rotating parts by means of the information received from the sensors, and
- determining the proper operation of the sensors and/or the contact between the contact pads and the load by means of the rotation information.

2. The method of handling a load according to claim 1, **characterised in that** in the method further comprises a step of measuring the position and movement of the arms with displacement sensors (30, 31, 30A, 31A) in order to provide additional information for determining the proper operation of the sensors and/or the contact between the contact pads and the load.

3. The method of handling a load according to claim 1 or 2, **characterised in that** in the method: if the sensor sends signals to the controller, the sensor is operating properly and the handling operation is continued, otherwise an error signal is sent and the handling operation is interrupted.

4. The method of handling a load according to claim 1 or 2, **characterised in that** the movement of the arms is measured, and if pulses are received by the controller, and the arms are not moving, there is no contact and an error message is sent and the handling operation is interrupted.

5. The method of handling a load according to claim 1 or 2, **characterised in that in that** the movement of the arms is measured, and if the arms are not moving and the controller is not receiving pulses, the handling operation is continued.

6. The method of handling a load according to claim 1, **characterised in that** at least two slip sensors are arranged into the arms or contact pads at a horizontal distance from each other, and that pulses from the slip sensors are read in order to determine the number of the load units in the lengthwise direction.

7. The method of handling a load according to claim 1, **characterised in that** displacement sensors (30A, 31A) are arranged in the gripper in order to determine the number of the load units in the transverse direction.

8. The method of handling a load according to claim 1, **characterised in that** at least one infrared (IR), ultrasound or similar sensor is arranged on a height above the slip sensors in order to determine the number of the load units in the vertical direction.

9. A gripper for handling of loads (2, 2A), especially easily damageable goods, the gripper being provided with at least one controller (20) and arms (6, 7, 6A, 7A) capable of clamping the load by applying a compressive force to the load wherein the compressive force applied to the load is adjusted on the basis of the slippage measured with one or several rotatable slip sensors between the load and contact pads (8, 9, 8A, 9A) arranged in the arms, **characterised in that** gripper comprises:
- one or several drive units (29) arranged to rotate the rotating parts, like rollers, of the sensors, wherein the controller provides drive signals to the drive units (29),
- the controller monitors the rotation of the rotating parts by means of the information received from the sensors, and
- the controller determines the proper operation of the sensors and/or the contact between the contact pads and the load by means of the rotation information.

10. The gripper according to claim 9, **characterised in that** in the gripper further comprises means for measuring the movement of the arms in order to provide additional information for determining the proper operation of the sensors and/or the contact between the contact pads and the load.

11. The gripper according to claim 9 or 10, **characterised in that** in the controller: if the sensor sends rotation signals to the controller, the sensor is operating correctly and the load handling operation is continued, otherwise an error signal is sent and the load handling operation is interrupted.

12. The gripper according to claim 9 or 10, **characterised in that** in the controller the movement of the arms is measured, and if pulses are received by the controller, and the arms are not moving, there is no contact with the load and an error message is sent and the load handling operation is interrupted.

13. The gripper according to claim 9 or 10, **characterised in that** in the controller the movement of the arms is measured, and if the arms are not moving and the controller is not receiving pulses, the load handling operation is continued.

14. The gripper according to claim 9, **characterised in that** each sensor is a sensor unit comprising a friction roller (22), a clutch (52), motor (29) in connection with the roller, preferably coaxially with the roller thus capable of rotating the roller, and means for generating pulse signals according to the roller rotation.

15. The gripper according to claim 9, **characterised in that** at least two slip sensors are arranged at a horizontal distance from each other, and that pulses from the slip sensors are read in order to determine the number of the load units in the lengthwise direction.

16. The gripper according to claim 9, **characterised in that** displacement sensors (30A, 31A) are arranged in the gripper in order to determine the number of the load units in the transverse direction.

17. The gripper according to claim 9, **characterised in that** at least one infrared (IR), ultrasound or similar sensor is arranged on a height above the slip sensors in order to determine the number of the load units in the vertical direction.

## Patentansprüche

1. Verfahren zum Handhaben von Lasten (2, 2A), insbesondere leicht beschädigbaren Gütern, mit einer Greifvorrichtung, der mit Armen (6, 7, 6A, 7A) versehen ist, welche die Last durch Aufbringen einer Druckkraft auf die Last einspannen können, wobei die auf die Last aufgebrachte Druckkraft auf der Basis des Schlupfs eingestellt wird, der mit einem oder mehreren drehbaren Schlupfsensoren zwischen der Last und in den Armen angeordneten Kontaktflächen (8, 9, 8A, 9A) gemessen wird, **dadurch gekennzeichnet, dass** das Verfahren die folgenden Schritte aufweist:
- Liefern von Antriebssignalen an eine oder mehrere Antriebseinheiten (29), die angeordnet sind, um die drehenden Teile wie etwa Rollen der Sensoren zu drehen,
- Überwachen der Drehung der drehenden Teile mittels der von den Sensoren empfangenen Informationen, und
- Bestimmen des ordnungsgemäßen Operation der Sensoren und/oder des Kontakts zwischen den Kontaktflächen und der Last durch die Drehungsinformationen.

2. Verfahren zum Handhaben einer Last nach Anspruch 1, **dadurch gekennzeichnet, dass** das Verfahren ferner den folgenden Schritt aufweist: Messen der Position und Bewegung der Arme mit Verlagerungssensoren (30, 31, 30A, 31A), um zusätzliche Informationen zum Bestimmen der ordnungsgemäßen Operation der Sensoren und/oder des Kontakts zwischen den Kontaktflächen und der Last zu liefern.

3. Verfahren zum Handhaben einer Last nach Anspruch 1 oder 2, **dadurch gekennzeichnet, dass** dann, wenn der Sensor Signale an die Steuereinheit sendet, der Sensor ordnungsgemäß arbeitet und der Handhabungsvorgang fortgesetzt wird, und anderenfalls ein Fehlersignal gesendet und der Handhabungsvorgang unterbrochen wird.

4. Verfahren zum Handhaben einer Last nach Anspruch 1 oder 2, **dadurch gekennzeichnet, dass** die Bewegung der Arme gemessen wird, und dass dann, wenn von der Steuereinheit Impulse empfangen werden und sich die Arme nicht bewegen, kein Kontakt vorliegt und eine Fehlermeldung gesendet und der Handhabungsvorgang unterbrochen wird.

5. Verfahren zum Handhaben einer Last nach 1 oder 2, **dadurch gekennzeichnet, dass** die Bewegung der Arme gemessen wird, und dass dann, wenn sich die Arme nicht bewegen und die Steuereinheit keine Impulse empfängt, der Handhabungsvorgang fortgesetzt wird.

6. Verfahren zum Handhaben einer Last nach Anspruch 1, **dadurch gekennzeichnet, dass** mindestens zwei Schlupfsensoren in den Armen oder Kontaktflächen in einem horizontalen Abstand voneinander angeordnet sind, und dass Impulse von den Schlupfsensoren gelesen werden, um die Anzahl der Lasteinheiten in der Längsrichtung zu bestimmen.

7. Verfahren zum Handhaben einer Last nach Anspruch 1, **dadurch gekennzeichnet, dass** Verlagerungssensoren (30A, 31A) in der Greifvorrichtung angeordnet sind, um die Anzahl der Lasteinheiten in der Querrichtung zu bestimmen.

8. Verfahren zum Handhaben einer Last nach Anspruch 1, **dadurch gekennzeichnet, dass** mindestens ein Infrarot- (IR-), Ultraschall- oder ähnlicher Sensor auf einer Höhe über den Schlupfsensoren angeordnet ist, um die Anzahl der Lasteinheiten in der Vertikalrichtung zu bestimmen.

9. Greifvorrichtung zum Handhaben von Lasten (2, 2A), insbesondere leicht beschädigbaren Gütern, wobei die Greifvorrichtung mit mindestens einer Steuereinheit (20) und Armen (6, 7, 6A, 7A) versehen ist, welche die Last durch Aufbringen einer Druckkraft auf die Last einspannen können, wobei die auf die Last aufgebrachte Druckkraft auf der Basis des Schlupfs eingestellt wird, die mit einem oder mehreren drehbaren Schlupfsensoren zwischen der Last und in den Armen angeordneten Kontaktflächen (8, 9, 8A, 9A) gemessen wird, **dadurch gekennzeichnet, dass** der Greifvorrichtung Folgendes aufweist:
- eine oder mehrere Antriebseinheiten (29), die angeordnet sind, um die drehbaren Teile wie etwa Rollen der Sensoren zu drehen, wobei die Steuereinheit Antriebssignale an die Antriebseinheiten (29) liefert,
- wobei die Steuereinheit die Drehung der drehenden Teile mittels der von den Sensoren empfangenen Informationen überwacht, und
- die Steuereinheit die ordnungsgemäßen Operation der Sensoren und/oder den Kontakt zwischen den Kontaktflächen und der Last durch die Drehungsinformationen bestimmt.

10. Greifvorrichtung nach Anspruch 9, **dadurch gekennzeichnet, dass** sie ferner eine Einrichtung zum Messen der Bewegung der Arme aufweist, um zusätzliche Informationen zum Bestimmen der ordnungsgemäßen Operation der Sensoren und/oder des Kontakts zwischen den Kontaktflächen und der Last zu liefern.

11. Greifvorrichtung nach Anspruch 9 oder 10, **dadurch gekennzeichnet, dass** die Steuereinheit so ausgebildet ist, dass dann, wenn der Sensor Drehsignale an die Steuereinheit sendet, der Sensor korrekt arbeitet und der Lasthandhabungsvorgang fortgesetzt wird, und dass anderenfalls ein Fehlersignal gesendet und der Lasthandhabungsvorgang unterbrochen wird.

12. Greifvorrichtung nach Anspruch 9 oder 10, **dadurch gekennzeichnet, dass** die Steuereinheit so ausgebildet ist, dass die Bewegung der Arme gemessen wird, und dass dann, wenn von der Steuereinheit Impulse empfangen werden und sich die Arme nicht bewegen, kein Kontakt mit der Last vorliegt und eine Fehlermeldung gesendet und der Lasthandhabungsvorgang unterbrochen wird.

13. Greifvorrichtung nach Anspruch 9 oder 10, **dadurch gekennzeichnet, dass** die Steuereinheit so ausgebildet ist, dass die Bewegung der Arme gemessen wird, und dass dann, wenn sich die Arme nicht bewegen und die Steuereinheit keine Impulse empfängt, der Lasthandhabungsvorgang fortgesetzt wird.

14. Greifvorrichtung nach Anspruch 9, **dadurch gekennzeichnet, dass** jeder Sensor eine Sensoreinheit ist, die aufweist: eine Reibrolle (22), eine Kupplung (52), einen Motor (29) in Verbindung mit der Rolle, bevorzugt koaxial mit der Rolle und somit imstande, die Rolle zu drehen, und eine Einrichtung zum Erzeugen von Impulssignalen entsprechend der Rollendrehung.

15. Greifvorrichtung nach Anspruch 9, **dadurch gekennzeichnet, dass** mindestens zwei Schlupfsensoren in einem horizontalen Abstand voneinander angeordnet sind, und dass Impulse von den Schlupfsensoren gelesen werden, um die Anzahl der Lasteinheiten in der Längsrichtung zu bestimmen.

16. Greifvorrichtung nach Anspruch 9, **dadurch gekennzeichnet, dass** Verlagerungssensoren (30A, 31A) in der Greifvorrichtung angeordnet sind, um die Anzahl der Lasteinheiten in der Querrichtung zu bestimmen.

17. Greifvorrichtung nach Anspruch 9, **dadurch gekennzeichnet, dass** mindestens ein Infrarot- (IR-), Ultraschall- oder ähnlicher Sensor auf einer Höhe über den Schlupfsensoren angeordnet ist, um die Anzahl der Lasteinheiten in der Vertikalrichtung zu bestimmen.

## Revendications

1. Procédé de manutention de charges (2, 2A), et plus particulièrement de marchandises pouvant être facilement endommagées, à l'aide d'un préhenseur muni de bras (6, 7, 6A, 7A) capable de serrer la charge en appliquant une force de compression sur la charge, dans lequel la force de compression appliquée sur la charge est ajustée sur la base du glissement mesuré avec un ou plusieurs détecteur(s) rotatif(s) de glissement situé(s) entre la charge et des tampons de contact (8, 9, 8A, 9A) agencés dans les bras, **caractérisé en ce que** le procédé comprend les étapes suivantes :
- fournir des signaux de commande à une ou plusieurs unité(s) de commande (29) agencée(s) pour faire tourner les pièces rotatives, telles que les rouleaux, des détecteurs,
- surveiller la rotation des pièces rotatives au moyen de l'information reçue en provenance des détecteurs, et
- déterminer le bon fonctionnement des détecteurs et/ou du contact entre les tampons de contact et la charge au moyen de l'information de rotation.

2. Procédé de manutention d'une charge selon la revendication 1, **caractérisé en ce que** le procédé comprend en outre une étape de mesure de la position et du mouvement des bras avec des détecteurs de déplacement (30, 31, 30A, 31A) de façon à fournir une information supplémentaire pour déterminer le bon fonctionnement des détecteurs et/ou du contact entre les tampons de contact et la charge.

3. Procédé de manutention d'une charge selon la revendication 1 ou 2, **caractérisé en ce que**, dans le procédé : si le détecteur envoie des signaux au contrôleur, le détecteur est en cours de fonctionnement correct et l'opération de manutention est poursuivie ; sinon, un signal d'erreur est envoyé et l'opération de manutention est interrompue.

4. Procédé de manutention d'une charge selon la revendication 1 ou 2, **caractérisé en ce que** le mouvement des bras est mesuré, et, si des impulsions sont reçues par le contrôleur, et si les bras ne bougent pas, il n'y a aucun contact et un message d'erreur est envoyé et l'opération de manutention est interrompue.

5. Procédé de manutention d'une charge selon la revendication 1 ou 2, **caractérisé en ce que** le mouvement des bras est mesuré, et, si les bras ne bougent pas et si le contrôleur ne reçoit pas d'impulsions, l'opération de manutention est poursuivie.

6. Procédé de manutention d'une charge selon la revendication 1, **caractérisé en ce qu'**au moins deux détecteurs de glissement sont agencés dans les bras ou les tampons de contact à une distance horizontale l'un de l'autre, et **en ce que** les impulsions provenant des détecteurs de glissement sont lues afin de déterminer le nombre d'unités de charges dans le sens de la longueur.

7. Procédé de manutention d'une charge selon la revendication 1, **caractérisé en ce que** des détecteurs de déplacement (30A, 31A) sont agencés dans le préhenseur afin de déterminer le nombre d'unités de charges dans le sens transversal.

8. Procédé de manutention d'une charge selon la revendication 1, **caractérisé en ce qu'**au moins un détecteur infrarouge (IR), ultrasonore ou similaire est agencé à une hauteur au-dessus des détecteurs de glissement afin de déterminer le nombre d'unités de charges dans le sens vertical.

9. Préhenseur destiné à la manutention de charges (2, 2A), et plus particulièrement de marchandises pouvant être facilement endommagées, le préhenseur étant pourvu d'au moins un contrôleur (20) et de bras (6, 7, 6A, 7A) capables de serrer la charge en appliquant une force de compression sur la charge, dans lequel la force de compression appliquée sur la charge est ajustée sur la base du glissement mesuré avec un ou plusieurs détecteur(s) rotatif(s) de glissement situé(s) entre la charge et les tampons de contact (8, 9, 8A, 9A) agencés dans les bras, **caractérisé en ce que** le préhenseur comprend :
- une ou plusieurs unité(s) de commande (29) agencée(s) pour faire tourner les pièces rotatives, telles que les rouleaux, des détecteurs, grâce à quoi le contrôleur fournit des signaux de commande aux unités de commande (29),
- le contrôleur surveille la rotation des pièces rotatives au moyen de l'information reçue en provenance des détecteurs, et
- le contrôleur détermine le bon fonctionnement des détecteurs et/ou du contact entre les tampons de contact et la charge au moyen de l'information de rotation.

10. Préhenseur selon la revendication 9, **caractérisé en ce que** le préhenseur comprend en outre un moyen de mesure du mouvement des bras afin de fournir une information supplémentaire permettant de déterminer le bon fonctionnement des détecteurs et/ou du contact entre les tampons de contact et la charge.

11. Préhenseur selon la revendication 9 ou 10, **caractérisé en ce que**, dans le contrôleur : si le détecteur envoie des signaux de rotation au contrôleur, le détecteur est en cours de fonctionnement correct et l'opération de manutention de charge est poursuivie ; sinon, un signal d'erreur est envoyé et l'opération de manutention de charge est interrompue.

12. Préhenseur selon la revendication 9 ou 10, **caractérisé en ce que**, dans le contrôleur, le mouvement des bras est mesuré et, si des impulsions sont reçues par le contrôleur, et si les bras ne bougent pas, il n'y a aucun contact avec la charge et un message d'erreur est envoyé et l'opération de manutention de charge est interrompue.

13. Préhenseur selon la revendication 9 ou 10, **caractérisé en ce que**, dans le contrôleur, le mouvement des bras est mesuré et, si les bras ne bougent pas et si le contrôleur ne reçoit pas d'impulsions, l'opération de manutention de charge est poursuivie.

14. Préhenseur selon la revendication 9, **caractérisé en ce que** chaque détecteur est une unité de détecteur comprenant un rouleau de friction (22), un embrayage (52), un moteur (29) relié au rouleau, de préférence coaxialement avec le rouleau, étant ainsi capable de faire tourner le rouleau, et un moyen de génération de signaux d'impulsions selon la rotation du rouleau.

15. Préhenseur selon la revendication 9, **caractérisé en ce qu'**au moins deux détecteurs de glissement sont agencés à une distance horizontale l'un de l'autre, et **en ce que** les impulsions provenant des détecteurs de glissement sont lues afin de déterminer le nombre d'unités de charges dans le sens de la longueur.

16. Préhenseur selon la revendication 9, **caractérisé en ce que** des détecteurs de déplacement (30A, 31A) sont agencés dans le préhenseur afin de déterminer le nombre d'unités de charges dans le sens transversal.

17. Préhenseur selon la revendication 9, **caractérisé en ce qu'**au moins un détecteur infrarouge (IR), ultrasonore ou similaire est agencé à une hauteur au-dessus des détecteurs de glissement afin de déterminer le nombre d'unités de charges dans le sens vertical.
